(19) Europäisches Patentamt
European Patent Office
Office européen des brevets

(11) **EP 1 840 104 A2**

(12) **EUROPEAN PATENT APPLICATION**

(43) Date of publication:
**03.10.2007 Bulletin 2007/40**

(51) Int Cl.:
*C04B 35/468* (2006.01)   *H01G 4/12* (2006.01)
*H01G 4/30* (2006.01)

(21) Application number: **07104871.4**

(22) Date of filing: **26.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **28.03.2006 JP 2006089061**

(71) Applicant: **TDK Corporation**
**Tokyo 103-8272 (JP)**

(72) Inventors:
- **Yanagida, Miyuki**
  **Tokyo**
  **Tokyo 103-8272 (JP)**

- **Kojima, Mitsuru**
  **Tokyo**
  **Tokyo 103-8272 (JP)**
- **Fujimura, Tomoyoshi**
  **Tokyo**
  **Tokyo 103-8272 (JP)**
- **Sato, Akira**
  **Tokyo**
  **Tokyo 103-8272 (JP)**

(74) Representative: **Vossius & Partner**
**Siebertstrasse 4**
**81675 München (DE)**

(54) **Dielectric particles, dielectric ceramic composition, and method of production of the same**

(57)   Dielectric particles including a main component including barium titanate and R oxide (where R is at least one element selected from Y, La, Ce, Pr, Nd, Pm, Sm, Eu, Gd, Tb, Dy, Ho, Er, Tm, Yb, and Lu), wherein when defining the size of the dielectric particles as "D" and defining the region of a depth from the particle surface of 0% to 10% of said D as a surface region, a region of a depth from the particle surface of more than 10% to less than 40% of the D as an intermediate region, and a region of a depth from the particle surface of 40% to 50% of the D as a center region, in the surface region, the ratio of content of the R oxide decreases from the surface side toward the center of the dielectric particles and in the center region, the ratio of content of the R oxide increases from the surface side toward the center of the dielectric particles.

FIG. 2

PARTICLE DIAMETER "D"

$T_{40}$

$T_{10}$

$T_{50}$

CENTER REGION

INTERMEDIATE REGION

SURFACE REGION

EP 1 840 104 A2

**Description**

The present invention relates to a dielectric ceramic composition used for the dielectric layers of electronic devices such as multilayer ceramic capacitors, a method of production of the same, and an electronic device having this dielectric ceramic composition as dielectric layers.

A multilayer ceramic capacitor, one example of an electronic device, is for example produced by printing a predetermined pattern of internal electrodes on a ceramic green sheet comprised of a predetermined dielectric ceramic composition, alternately stacking a plurality of these, unifying the result, then simultaneously firing the obtained green chip. It is necessary that a material which does not react with a ceramic dielectric is selected for the internal electrode layer of the multilayer ceramic capacitor so as to be unified with the ceramic dielectric by firing. For this reason, in the past, it had been required to use platinum, palladium, and other expensive precious metals as the material forming the internal electrode layers.

However, in recent years, dielectric ceramic compositions wherein an inexpensive base metal, such as nickel and copper, can be used has been developed and a major cost reduction has been realized.

Further, in recent years, there have been strong demands for reducing the size of electronic devices along with an electronic circuits becoming high-density. Multilayer ceramic capacitors are rapidly being reduced in size and increased in capacity. To reduce the size and increase the capacity of multilayer ceramic capacitors, in general the method of making the dielectric layers thinner, the method of increasing the specific permittivity of the dielectric ceramic composition included in the dielectric layers, etc. have been known. However, if making the dielectric layers thinner, the field applied to the dielectric layers when applying a DC voltage becomes stronger, so there was the problem that the change in the specific permittivity over time, that is, the change in capacity over time, ended up becoming greater.

To reduce the change in capacity under a DC electric field over time, the method has been proposed to use dielectric particles having a small average crystal grain size as the dielectric particles included in the dielectric layers (for example, Japanese Patent Publication (A) No. 8-124785). Japanese Patent Publication (A) No. 8-124785 discloses a dielectric ceramic composition having a specific composition and having dielectric particles with an average crystal grain size of 0.45 $\mu$m or less. However, the dielectric ceramic composition of this publication is too low in specific permittivity, so it is difficult to attain reduction of size and increase of capacity.

Further, Japanese Patent Publication (A) No. 2000-281341 discloses the method of using basic carbonates of rare earth elements to make the rare earth elements and barium titanate react. This publication aims at improvement of the characteristics of a ceramic capacitor by improving the dispersion of the added subcomponents (for example, rare earth elements) in the dielectric ceramic composition forming the dielectric layers. However, the method described in Japanese Patent Publication (A) No. 2000-281341 had the problem that the production process was complicated and the problem that the concentration of the rare earths around the barium titanate powder was too high.

The present invention was made in consideration of this situation and has as its object to provide dielectric particles used as a material for a dielectric ceramic composition forming dielectric layers of a multilayer ceramic capacitor etc. and able to improve the accelerated life of the insulation resistance (IR) without causing deterioration of the other electrical characteristics (for example, the specific permittivity, temperature characteristic of electrostatic capacitance, insulation resistance, CR product, and dielectric loss) and further a dielectric ceramic composition using such dielectric particles and a method of production of the same. Further, the present invention has as its object the provision of a multilayer ceramic capacitor or other electronic device having dielectric layers formed by such a dielectric ceramic composition.

The inventors engaged in intensive research to achieve these objects and as a result discovered that these objects could be achieved by dielectric particles having a main component including barium titanate and R oxide (where R is at least one element selected from Y, La, Ce, Pr, Nd, Pm, Sm, Eu, Gd, Tb, Dy, Ho, Er, Tm, Yb, and Lu), wherein a specific distribution is given to the content of R oxide in the particles and thereby completed the present invention.

That is, the dielectric particles according to the present invention are dielectric particles including

a main component including barium titanate and

R oxide (where R is at least one element selected from Y, La, Ce, Pr, Nd, Pm, Sm, Eu, Gd, Tb, Dy, Ho, Er, Tm, Yb, and Lu), wherein when defining the particle diameter of the dielectric particles as "D" and defining the region of a depth from the particle surface of 0% to 10% of the D as a surface region, a region of a depth from the particle surface of more than 10% to less than 40% of the D as an intermediate region, and a region of a depth from the particle surface of 40% to 50% of the D as a center region,

in the surface region, the ratio of content of the R oxide decreases from the surface side toward the center of the dielectric particles and in the center region, the ratio of content of the R oxide increases from the surface side toward the center of the dielectric particles.

Preferably, when defining the average number of moles of the R oxide converted to R elements with respect to 100 moles of the barium titanate in the dielectric particles as a whole as $M_{ave}$, the $M_{ave}$ is more than 0 mole and not more than 0.5 mole.

Preferably, relating to the ratio of content of the R oxide in the surface region, when defining the numbers of moles of the R oxide converted to R elements with respect to 100 moles of barium titanate at the depths of 0% and 10% of the D as $M_0$ and $M_{10}$ respectively, the ratio $M_0/M_{10}$ is 1 to 30 (however, not including 1) .

Preferably, relating to the ratio of content of the R oxide in the center region, when defining the numbers of moles of the R oxide converted to R elements with respect to 100 moles of barium titanate at the depths of 40% and 50% of the D as $M_{40}$ and $M_{50}$ respectively, the ratio $M_{50}/M_{40}$ is 1 to 100 (however, not including 1) .

Preferably, the numbers of moles of the R oxide converted to R elements with respect to 100 moles of barium titanate at the intermediate region is a range of 0.2 to 8.0 times the $M_{ave}$.

Further, a method of production of a dielectric ceramic composition according to the present invention is a method of producing a dielectric ceramic composition having a main component including barium titanate and a fourth subcomponent including R oxide (where R is at least one element selected from Y, La, Ce, Pr, Nd, Pm, Sm, Eu, Gd, Tb, Dy, Ho, Er, Tm, Yb, and Lu), comprising

a step of preparing a reacted material obtained by reacting the material of the main component and at least part of the material of the fourth subcomponent in advance,

a step of adding the reacted material and the remainder of the material of the fourth subcomponent to be included in the dielectric ceramic composition to obtain a dielectric ceramic composition powder, and

a step of firing the dielectric ceramic composition powder,

wherein any of the above dielectric particles is used as the reacted material.

In the method of production of the present invention, the dielectric particles of the present invention having the above configuration are used as the reacted material obtained by reacting part of the fourth subcomponent to be included in the dielectric ceramic composition. For this reason, according to the method of production of the present invention, it is possible to provide a dielectric ceramic composition improving the accelerated life of the insulation resistance (IR) while maintaining good other electrical characteristics (for example, the specific permittivity, temperature characteristic of the electrostatic capacitance, insulation resistance, CR product, and dielectric loss). Further, in the method of production of the present invention, the step is employed of adding the remainder of the material of the fourth subcomponent to this reacted material to obtain a dielectric ceramic composition powder and then fire this dielectric ceramic composition powder. This dielectric ceramic composition powder is prepared by adding other materials as required in addition to the material of the fourth subcomponent and may be further calcined as required.

Preferably, the content of the fourth subcomponent in the finally obtained dielectric ceramic composition converted to R elements is 0.1 to 10 moles with respect to 100 moles of the main component.

Preferably, the ratio of the fourth subcomponent included in the reacted material converted to R elements with respect to 100 moles% of the total of the fourth subcomponent to be finally included in the dielectric ceramic composition is more than 0 mole% to less than 50 mole%.

Preferably, the dielectric ceramic composition further includes

a first subcomponent including at least one type of compound selected from MgO, CaO, BaO, and SrO,

a second subcomponent including mainly $SiO_2$ and at least one type of compound selected from MO (where M is at least one type of element selected from Mg, Ca, Ba, and Sr), $Li_2O$, and $B_2O_3$, and

a third subcomponent including at least one type of compound selected from $V_2O_5$, $MoO_3$, and $WO_3$,

the ratios of the subcomponents with respect to 100 moles of the main component are

the first subcomponent: 0.1 to 5 moles,

the second subcomponent: 0.1 to 12 moles,

the third subcomponent: 0 to 0.3 mole (however not including 0).

Preferably, the dielectric ceramic composition further includes a fifth subcomponent including at least one compound selected from MnO and $Cr_2O_3$, and a ratio of the fifth subcomponent with respect to 100 moles of the main component is 0.05 to 1.0 mole.

A dielectric ceramic composition according to the present invention is the dielectric ceramic composition produced by any of the above methods.

An electronic device according to the present invention has dielectric layers comprised of the above dielectric ceramic composition. The electronic device is not particularly limited. A multilayer ceramic capacitor, piezoelectric device, chip inductor, chip varistor, chip thermistor, chip resistor, or other surface mounted (SMD) chip type electronic devices may be mentioned.

According to the present invention, there is provided dielectric particles including a main component including barium titanate and R oxide wherein the ratios of content of the R oxide in the particles is as follows: That is, in the surface region, the ratio of content of the R oxide decreases from the surface side toward the center of the dielectric particles while in the center region, the ratio of content of the R oxide increases from the surface side toward the center of the dielectric particles. Further, by using the dielectric particles of the present invention as the material for a dielectric ceramic composition forming the dielectric layers of a multilayer ceramic capacitor or other electronic device, it is possible to improve the accelerated life of the insulation resistance (IR) in the obtained dielectric ceramic composition while maintaining good electrical characteristics (for example, the specific permittivity, temperature characteristic of the electrostatic capacitance, insulation resistance, CR product, and dielectric loss).

Below, embodiments of the present invention will be explained in detail based on the drawings, in which:

FIG. 1 is a sectional view of a multilayer ceramic capacitor according to an embodiment of the present invention.

FIG. 2 is a conceptual view for explaining the internal structure of a dielectric particle according to an embodiment of the present invention, and

FIG. 3 and FIG. 4 are graphs showing the relationships between the depths from the surface to center of the dielectric particles and the ratios of content of R oxide (Y oxide) of examples and comparative examples of the present invention.

Multilayer Ceramic Capacitor 1

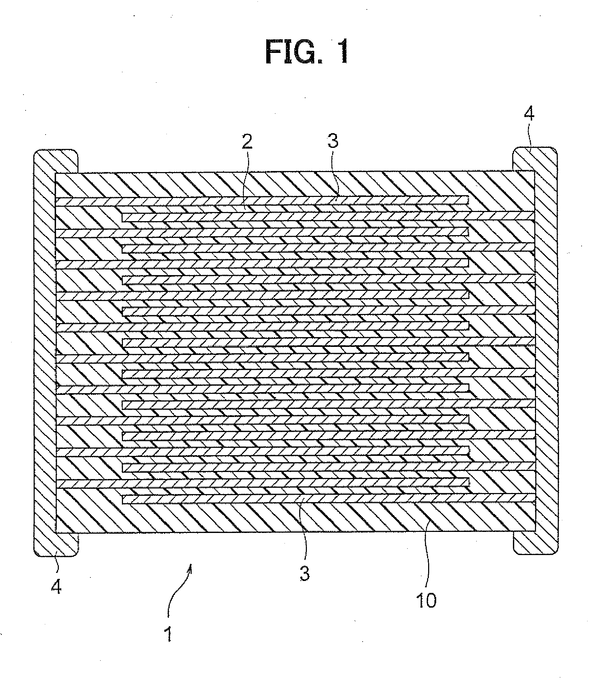

As shown in FIG. 1, a multilayer ceramic capacitor 1 according to an embodiment of the present invention has a capacitor element body 10 comprised of dielectric layers 2 and internal electrode layers 3 alternately stacked. The two ends of the capacitor element body 10 are formed with a pair of external electrodes 4 connected to alternately arranged internal electrode layers 3 inside the element body 10. The capacitor element body 10 is not particularly limited in shape. Further, the dimensions are not particularly limited and may be made suitable dimensions in accordance with the applications.

The internal electrode layers 3 are stacked so that their end faces are alternately exposed at the surfaces of the two facing ends of the capacitor element body 10. The pair of external electrodes 4 are formed at the two ends of the capacitor element body 10 and are connected to the exposed end faces of the alternately arranged internal electrode layers 3 to form a capacitor circuit.

Dielectric Layers 2

The dielectric layers 2 contain the dielectric ceramic composition.

In the present embodiment, the dielectric ceramic composition is comprised of a main component constituted by barium titanate, a fourth subcomponent including an oxide of R (where R is at least one type of element selected from Y, La, Ce, Pr, Nd, Pm, Sm, Eu, Gd, Tb, Dy, Ho, Er, Tm, Yb, and Lu), and other subcomponents. Note that the barium titanate is preferably expressed by the composition formula $Ba_mTiO_{2+m}$, where the "m" in the composition formula is $0.990 < m < 1.010$ and the ratio of Ba and Ti is $0.990 < Ba/Ti < 1.010$.

The fourth subcomponent is a subcomponent including R oxide. The R elements of the R oxide are at least one type of element selected from Y, La, Ce, Pr, Nd, Pm, Sm, Eu, Gd, Tb, Dy, Ho, Er, Tm, Yb, and Lu. Among these, Y, Pm, Sm, Eu, Gd, Tb, Dy, Ho, Er, Tm, Yb, and Lu are preferable. More preferable are Y, Tb, and Yb.

The fourth subcomponent has the effect of improving the IR accelerated life characteristic. The content of the fourth subcomponent is preferably, converted to R, 0.1 to 10 moles, more preferably 0.2 to 6 moles. If the content is too small, the effect of addition of the fourth subcomponent can no longer be obtained and the capacity-temperature characteristic ends up deteriorating. On the other hand, if the content is too great, the sinterability tends to deteriorate. Note that as described in detail later, in the present embodiment, the configuration is employed of including at least part of the material of the fourth subcomponent in the dielectric ceramic composition as a reacted material reacted in advance with the main component.

In the present embodiment, as subcomponents other than the fourth subcomponent including the R oxide, the following first to third and fifth subcomponents are preferably further included.

That is, the dielectric ceramic composition further includes a first subcomponent including at least one type of compound selected from MgO, CaO, BaO, and SrO,

a second subcomponent including mainly $SiO_2$ and at least one type of compound selected from MO (where M is at least one type of element selected from Mg, Ca, Ba, and Sr), $Li_2O$, and $B_2O_3$,

a third subcomponent including at least one type of compound selected from $V_2O_5$, $MoO_3$, and $WO_3$, and

a fifth subcomponent including at least one compound selected from MnO and $Cr_2O_3$.

The ratios of the sub subcomponents to the main component are, converted to oxides, with respect to 100 moles of the main component,

first subcomponent: 0.1 to 5 moles,

second subcomponent: 0.1 to 12 moles,

third subcomponent: 0 to 0.3 mole (however not including 0),

fifth subcomponent: 0.05 to 1.0 mole,

preferably

first subcomponent: 0.2 to 4 moles,

second subcomponent: 1 to 6 moles,

third subcomponent: 0 to 0.25 mole (however, not including 0,

fifth subcomponent: 0.05 to 0.4 mole.

In the present embodiment, by including in the dielectric ceramic composition the first to third and fifth subcomponents in addition to the fourth subcomponent including the R oxide, it is possible to improve the temperature characteristic of the electrostatic capacitance and possible to satisfy the X7R characteristic of the EIA standard (-55 to 125°C, within $\Delta C = \pm 15\%$).

In this specification, the oxides forming the main component and the subcomponents are expressed by stoichiochemic compositions, but the oxidation states of the oxides may be deviated from the stoichiochemic compositions. However, the ratios of the subcomponents are found by conversion from the amounts of metal contained in the oxides forming the subcomponents to oxides of the above stoichiochemic compositions.

The reasons for limitation of the contents of the above subcomponents are as follows:

If the content of the first subcomponent (MgO, CaO, BaO, and SrO) is too small, the rate of change of the capacity to temperature ends up becoming larger. On the other hand, if the content is too great, the sinterability deteriorates and the high temperature accelerated life tends to deteriorate. Note that the ratios of the oxides in the first subcomponent may be any ratios.

The second subcomponent includes $SiO_2$ as a main component and includes at least one type of compound selected from MO (where M is at least one type of element selected from Mg, Ca, Ba, and Sr), $Li_2O$, and $B_2O_3$. The second subcomponent functions as a sintering aid. The MO (where M is at least one type of element selected from Mg, Ca, Ba, and Sr) is also included in the first subcomponent, but by making it a composite oxide with $SiO_2$ to obtain a compound expressed by the formula $M_xSiO_{2+x}$, it is possible to lower the melting point. Further, since it is possible to lower the melting point, it is possible to improve the reactivity with respect to the main component. Note that when using as the MO, for example, BaO and CaO, the composite oxides may be made a compound expressed by the formula $(Ba, Ca)_xSiO_{2+x}$. The "x" in the formula $(Ba,Ca)_xSiO_{2+x}$ is preferably 0.8 to 1.2, more preferably 0.9 to 1.1. If "x" is too small, that is, if $SiO_2$ is too large, it reacts with the $Ba_mTiO_{2+m}$ of the main component and causes the dielectric characteristics to deteriorate. On the other hand, if "x" is too large, the melting point becomes high and the sinterability is deteriorated.

The third subcomponent ($V_2O_5$, $MoO_3$, and $WO_3$) has the effect of flattening the capacity-temperature characteristic above the Curie temperature and the effect of improving the high temperature accelerated life. If the content of the third subcomponent is too small, these effects become insufficient. On the other hand, if the content is too great, the IR sharply drops. Note that the ratios of the oxides in the third subcomponent may be any ratios.

The fifth subcomponent (MnO and $Ca_2O_3$) has the effect of shifting the Curie temperature to the high temperature side and also the effects of flattening the capacity-temperature characteristic, improving the insulation resistance (IR), improving the breakdown strength, and lowering the firing temperature.

The average crystal grain size of the sintered body (crystal grains) included in the dielectric ceramic composition is not particularly limited, but is preferably 0.1 to 0.5 $\mu$m, more preferably 0.1 to 0.3 $\mu$m. If the average crystal grain size is too small, the specific permittivity tends to end up falling, while if too large, the change in the specific permittivity along with time tends to become larger. The average crystal grain size of the sintered body can be measured for example from an SEM image of the sintered body by the cord method of measuring the average grain size assuming the crystal particles forming the sintered body as spherical in shape.

The thickness of the dielectric layers 2 is not particularly limited, but is preferably 4.5 $\mu$m or less per layer, more preferably 3.5 $\mu$m or less, furthermore preferably 3.0 $\mu$m or less. The lower limit of the thickness is not particularly limited, but is for example 0.5 $\mu$m or so.

The number of dielectric layers 2 is not particularly limited, but is preferably 20 or more, more preferably 50 or more, particularly preferably 100 or more. The upper limit of the number of layers is not particularly limited, but for example is 2000 or so.

Internal Electrode Layers 3

The conductive material contained in the internal electrode layers 3 is not particularly limited, but since the material forming the dielectric layers 2 has reduction resistance, a relatively inexpensive base metal may be used. As the base metal used as the conductive material, Ni or an Ni alloy is preferable. As an Ni alloy, an alloy of Ni with one or more elements selected from Mn, Cr, Co, and Al is preferable. The content of Ni in the alloy is preferably 95 wt% or more. Note that Ni or Ni alloy may also contain P or other various types of minor ingredients in an amount of 0.1 wt% or so or less. The thickness of the internal electrode layers 3 may be suitably determined in accordance with the application etc., but usually is 0.1 to 3 $\mu$m, in particular 0.2 to 2.0 $\mu$m or so.

External Electrodes 4

The conductive material contained in the external electrodes 4 is not particularly limited, but in the present embodiment, the inexpensive Ni, Cu, or their alloys can be used. The thickness of the external electrodes 4 may be suitably determined in accordance with the application etc., but usually is 10 to 50 $\mu$m or so.

Method of Production of Multilayer Ceramic Capacitor

A multilayer ceramic capacitor of the present embodiment, like a conventional multilayer ceramic capacitor, is produced by fabricating a green chip by a usual printing method or sheet method using pastes, firing this, then printing or transferring and then firing the external electrodes. Below, the method of production will be explained in further detail.

First, the dielectric ceramic composition powder to be included in the dielectric layer paste is prepared.

In the present embodiment, the dielectric ceramic composition powder is prepared as follows. That is, first, the material of the main component and part of the material of the fourth subcomponent (material corresponding to part of fourth subcomponent to be included in dielectric ceramic composition) are pre-reacted to prepare a reacted material. Next, the remainder of the material of the fourth subcomponent (remainder of material in fourth subcomponent for forming dielectric ceramic composition) and the materials of the first to third and fifth subcomponents are added to this reacted material, the mixture is calcined if necessary, to prepare a dielectric ceramic composition powder.

In the present embodiment, the dielectric particles of the present invention are used as the reacted material of the material of the main component and part of the material of the fourth subcomponent reacted in advance.

The dielectric particles of the present invention (reacted material) are comprised containing a main component including barium titanate and R oxide (fourth subcomponent).

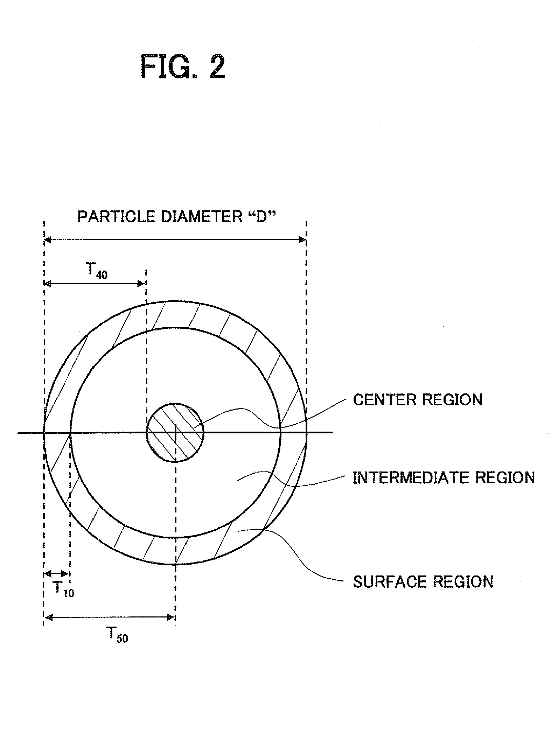

Further, the dielectric particles of the present invention (reacted material), as shown in FIG. 2, are structured internally divided into three regions from the surface side of the particles toward the center of the particles, that is, a surface region, intermediate region, and center region, with predetermined aspects of ratios of content of R oxide (fourth subcomponent) in the particles in those regions. That is, in the surface region shown in FIG. 2, the ratio of content of the R oxide decreases from the surface side toward the center of the particles, while at the center region shown in FIG. 2, the ratio of content of R oxide increases from the surface side toward the center of the particles.

Note that FIG. 2 is a view schematically showing a cross-section of the dielectric particles of the present invention and specifically shows a cross-section passing through the center of the particles. Further, in FIG. 2, when defining the particle diameter of the dielectric particles as "D" and defining the length of the particle diameter D of the dielectric particles as 100%, the positions of the depths from the particle surface corresponding to the depths of 0%, 10%, 40%, and 50% of D are defined as $T_0$, $T_{10}$, $T_{40}$, and $T_{50}$. Here, $T_0$ means the particle surface while $T_{50}$ means the center of the particles.

Further, in the present embodiment, the surface region is defined as the region of a depth from the particle surface of 0% to 10% of the particle diameter D, the intermediate region is defined as the region of a depth from the particle surface of over 10% to less than 40% of the particle diameter D, and the center region is defined as the region of a depth from the particle surface of 40% to 50% of the particle diameter D. That is, in FIG. 2, the region in the range of depth from $T_0$ to $T_{10}$ is defined as the surface region, the region in the range of depth from $T_{40}$ to $T_{50}$ is defined as the center region, and the region positioned between these surface region and center region is defined as the intermediate region.

Regarding the ratio of content of R oxide in the particles, by making the ratio decrease from the surface side toward the center of the particles at the surface region and making it increase from the surface side toward the center of the particles at the center region, the following effects are exhibited. That is, by using the thus configured dielectric particles as the reacted material to be included in the dielectric ceramic composition powder, it is possible to improve the accelerated life of the insulation resistance while maintaining a good specific permittivity, temperature characteristic of the electrostatic capacitance, insulation resistance, CR product, and dielectric loss.

Note that at the surface region, the dielectric particles of the present invention need only be comprised so that the ratio of content of R oxide substantially decreases from the surface side toward the center of the particles. For example, they may also be comprised so that the ratio of content of the R oxide decreases from 0% to 5% or so of the particle diameter D, while the ratio of content of the R oxide remains constant from over 5% to 10% or so of the particle diameter D (or, if in extremely small amounts, increases). Further, at the surface region, it is preferable that the ratio of R oxide becomes the highest at the vicinity of the particle surface (that is, near the depth $T_0$ shown in FIG. 2).

Similarly, at the center region, the dielectric particles need only be comprised so that the ratio of content of R oxide substantially increases from the surface side toward the center of the particles. For example, they may also be comprised so that the ratio of content of the R oxide increases from 45% to 50% or so of the particle diameter D, while the ratio of content of the R oxide remains constant from 40% to less than 45% or so of the particle diameter D (or, if in extremely small amounts, decreases). Further, at the center region, it is preferable that the ratio of R oxide becomes the highest at the vicinity of the particle center (that is, near the depth $T_{50}$ shown in FIG. 2). Note that the "particle center" need not be the center in the strict sense of the term and may also be the substantial center. That is, the part where the ratio of content of R oxide becomes the highest may also be somewhat deviated from the center of the particles in the strict sense.

On the other hand, at the intermediate region, the ratio of content of the R oxide may be constant or, while slight, may increase or decrease from the surface side toward the center of the particles.

In the dielectric particles of the present invention, the ratios of content of the barium titanate and the R oxide are preferably made the following ranges: That is, when defining the average number of moles of the R oxide, converted to R elements, with respect to 100 moles of the barium titanate in the dielectric particles as a whole as $M_{ave}$, the average number of moles $M_{ave}$ is preferably greater than 0 mole and not more than 0.5 mole, more preferably is 0.01 to 0.2 mole. If the average number of moles $M_{ave}$ is too high, when using the particles as the reacted material to be included in a dielectric ceramic composition powder, the crystal grain size of the sintered body obtained after firing will end up becoming too large and the temperature characteristics will deteriorate or the insulation resistance (IR) will tend to drop.

Further, in the dielectric particles of the present invention, the ratios of content of R oxide at the surface region, intermediate region, and center region are more preferably in the following relationships.

That is, regarding the ratio of content of the R oxide at the surface region, when defining the number of moles of R oxide, converted to R elements, with respect to 100 moles of barium titanate at depths of 0% and 10% of the particle diameter D (that is, $T_0$ and $T_{10}$ shown in FIG. 2) as $M_0$ and $M_{10}$, the ratio $M_0/M_{10}$ is preferably a range of 1 to 30 (however, not including 1), more preferably a range of 1 to 25 (however, not including 1), furthermore preferably 1 to 20 (however, not including 1) . If $M_0/M_{10}$ is too small, the above effect tends to no longer be obtained. On the other hand, if $M_0/M_{10}$ becomes too large, the specific permittivity tends to become lower. Note that the $M_0$ and $M_{10}$ (later explained $M_{40}$, $M_{50}$ as well) need only be the numbers of moles of R oxide at substantially the depths of 0% and 10% of the particle diameter D and do not have to be the numbers of moles at the depths of strictly 0% and 10%. In particular, when measuring these $M_0$ and $M_{10}$ by the later explained method using a plasma spectrophotometer (ICP), for example, values within the range of the measured values $\pm 3\%$ or so are sufficient. In this case, it is sufficient to find the number of moles of R oxide at the depths of 0% and 10% (that is, $M_0$ and $M_{10}$) based on a plurality of measurement results at the actually measured depths (that is, depths in range of $\pm 3\%$ or so).

Farther, regarding the ratio of content of R oxide at the center region, when defining the number of moles of R oxide, converted to R elements, with respect to 100 moles of barium titanate at depths of 40% and 50% of the particle diameter D (that is, $T_{40}$ and $T_{50}$ shown in FIG. 2) as $M_{40}$ and $N_{50}$, the ratio $M_{50}/M_{40}$ is preferably a range of 1 to 100 (however, not including 1), more preferably a range of 1 to 85 (however, not including 1) . If $M_{50}/M_{40}$ is too small, the above effect tends to no longer be obtained. On the other hand, if $M_{50}/M_{40}$ becomes too large, the grains easily grow and the insulation resistance (IR) tends to deteriorate.

Further, regarding the ratio of content of R oxide in the intermediate region, the number of moles of R oxide, converted to R elements, with respect to 100 moles of barium titanate is, with respect to the above average number of moles $M_{ave}$ of R oxide, preferably 0.2 to 8.0 times the average number of moles $M_{ave}$, more preferably 0.2 to 2.0 times.

Note that the method of measuring the ratios of content of R oxide at the depths in the dielectric particles is not particularly limited, but the methods of measurement using a plasma spectrophotometer (ICP), transmission electron microscope (TEM), etc. may be mentioned. Note that in a plasma spectrophotometer (ICP), the weight ratios of BaO, $TiO_2$, and $Y_2O_3$ and the ratio of $Y_2O_3$ to $BaTiO_3$ (molar ratio) are found from the measurement results. For example, when using a plasma spectrophotometer (ICP) to measure the ratios of content of R oxide, these may be found by using hydrochloric acid, hydrogen peroxide, etc. to dissolve the dielectric particles and measure the ratios of R elements in the dissolved ingredients derived from the dielectric particles. Note that in this case, by changing the dissolution conditions when dissolving the dielectric particles (for example, the dissolution time, pH of the solution, etc.), it is possible to suitably measure the ratios of content of R oxide at the different depths. For this reason, when for example changing the dissolution conditions by the dissolution time, it is possible to find the ratios of content of the R oxide at the different depths by sampling the dissolved ingredients of the dielectric particles at the different dissolution times and measuring the ratios of content of the R oxide of these sampled dissolved ingredients.

In the measurement using a plasma spectrophotometer (ICP), specifically, it is possible to measure the ratios of content as follows: That is, first, the dielectric particles are dissolved for a predetermined time, then the solution is filtered. The ratio of dissolution found from the weight of the dielectric particles remaining without being dissolved is defined as X and the rate of dissolution at a depth D (unit: %) from the surface of the dielectric particles is defined as $X_D$. Further, when defining the radius of the dielectric particles as r (unit: $\mu$m) and the density as $\rho$, the ratio of dissolution at a depth $D_x$ (unit: $\mu$m) is found by the following equation:

Equation 1

$$\frac{\frac{4}{3}\pi r^3 \cdot \rho - \frac{4}{3}\pi (r-Dx)^3 \cdot \rho}{\frac{4}{3}\pi r^3 \cdot \rho}$$

$$= \frac{r^3 - (r-Dx)^3}{r^3}$$

$$= 1 - \left(1 - \frac{Dx}{r}\right)^3$$

When defining the amount of dissolution at a depth D (%) from the surface as $V_D$, the ratio of the amount of dissolution is expressed as V/100. Further, the depth D (%) is expressed by $D_x = r \times (D/100)$ in relation to $D_x$ (μm). Therefore, the following equation is derived from the above equation.

Equation 2

$$\frac{V_D}{100} = 1 - \left(1 - \frac{Dx}{r}\right)^3 = 1 - \left(1 - \frac{D}{100}\right)^3$$

$$1 - \frac{D}{100} = \left(1 - \frac{V_D}{100}\right)^{\frac{1}{3}}$$

$$D = 100 \cdot \left(1 - \sqrt[3]{1 - \frac{V_D}{100}}\right)$$

Further, the amount of Y (converted to Y atoms) detected at a depth D (%) is calculated for 100 moles of $TiO_2$ and is multiplied with the rate of dissolution $X_D$ to obtain the total amount of dissolution $V_{(Y)D}$ at the depth D (%) from the surface. Note that the total amount of dissolution $V_{(Y)D}$ at the measurement point is the total amount from the surface. Further, the difference $\Delta V_{(Y)D}$ in amounts of dissolved Y between different points divided by $\Delta X_D$ is deemed the partial concentration of Y at the region between the measurement points.

Note that in the above case, for example, it is generally difficult to strictly extract the dissolved ingredients at the depth of 0% of the particle diameter D, so it is preferable to extract the dissolved ingredients at a plurality of points of several % of the depth and find the ratio of content of R oxide at the depth of 0% from these results.

Alternatively, when using a transmission electron microscope (TEM), for example, it is possible to measure the ratios by linear analysis. The dielectric particles are linearly analyzed by a TEM from first ends of the dielectric particles to the other ends through the centers of the particles. After this, the same particles are linearly analyzed shifted 90 degrees. These results are then averaged to find the ratios.

Further, the method of preparing the dielectric particles of the present invention having the above configuration (reacted material) is not particularly limited, but for example the following method may be mentioned.

That is, it is possible to use precursor of barium titanate as a material of barium titanate as the main component and one or more of R oxides, R alkoxides, and R inorganic acid salts as a material of the R oxides, mix these, and calcine the obtained mixture at preferably 500 to 1000°C or so.

Note that as precursors of barium titanate, for example barium titanyl oxalate, a reaction product of barium alkoxide and titanyl alkoxide, a reaction product of barium hydroxide·8 hydrate and titanium alkoxide, a citrate of barium/titanium, and other various types of compounds giving barium titanate upon firing may be mentioned.

The R alkoxides are compounds of alcohol and R elements. Specifically, they mean compounds where the hydrogens in the hydroxyl groups of the alcohols are substituted with R elements. The R alkoxides are not particularly limited, but the various compounds expressed by the general formula $C_nH_{2n+1}OR$ (n is an integer of 1 to 9) may be used. For example, $CH_3OR$, $C_2H_5OR$, $n-C_3H_7OR$, $i-C_3H_7OR$, etc. may be mentioned.

The R inorganic acid salts are not particularly limited, but for example chlorides, nitrates, phosphates, sulfates, etc. may be mentioned. Note that the R inorganic acid salts include many in a hydrated form and are normally used in a state dissolved in water or a water-soluble organic solvent.

Further, in the present embodiment, as the R oxide, sol type materials may be used. The sol type materials are not particularly limited. For example, hydroxide sols or oxide sols etc. may be mentioned. Further, the sol particle diameter of the sol materials is usually 1 to 100 nm or so. As the solvent, water or methanol, ethanol, or another alcohol, xylene, toluene, or another aromatic solvent, methylethyl ketone or another ketone, or other organic based solvents may be mentioned.

Alternatively, it is also possible to employ the method of using not a precursor of barium titanate, but barium titanate itself as the material of barium titanate as the main component, using an R alkoxide or R inorganic acid salt as the material of the R oxide, mixing these, and calcining the obtained mixture at preferably 500 to 1000°C or so.

Further, the remainder of the material of the fourth subcomponent (remainder of material in fourth subcomponent for forming dielectric ceramic composition) and the materials of the first to third and fifth subcomponents are added to the thus configured dielectric particles (reacted material), then these are mixed and, calcined if necessary, to obtain the dielectric ceramic composition powder. As the remainder of material of the fourth subcomponent and the materials of the first to third and fifth subcomponents, the above oxides or their mixtures, composite oxides, and various types of compounds becoming the above oxides or composite oxides upon firing may be used.

Next, the obtained dielectric ceramic composition powder is used to produce a dielectric layer paste. The dielectric layer paste may be an organic-based paste obtained by kneading the dielectric ceramic composition powder and an organic vehicle or may be a water-based paste.

The "organic vehicle" is a binder dissolved in an organic solvent. The binder used for the organic vehicle is not particularly limited and may be suitably selected from ethyl cellulose, polyvinyl butyral, and other usual various types of binders. Further, the organic solvent used is also not particularly limited and may be suitably selected in accordance with the printing method, sheet method, or other method of use from terpineol, butyl carbitol, acetone, toluene, and other various types of organic solvents.

Further, when making the dielectric layer paste a water-based paste, a water-based vehicle comprised of a water-soluble binder or dispersant etc. dissolved in water should be kneaded with the dielectric material. The water-soluble binder used for the water-based vehicle is not particularly limited, but, for example, polyvinyl alcohol, cellulose, a water-soluble acryl resin, etc. may be used.

The internal electrode layer paste is prepared by kneading the above various types of conductive materials comprised of conductive metals or their alloys or various types of oxides, organometallic compounds, resinates, etc. forming the above conductive materials after firing and the above organic vehicle

The external electrode paste may be prepared in the same way as the internal electrode layer paste.

The contents of the organic vehicles in the above pastes are not particularly limited. The usual contents, for example, for the binder, 1 to 5 wt% or so and for the solvent, 10 to 50 wt% or so, may be used. Further, the pastes may, in accordance with need, contain various types of additives selected from dispersants, plasticizers, dielectrics, insulators, etc. The total content of these is preferably 10 wt% or less.

When using the printing method, the dielectric layer paste and internal electrode layer paste are printed in successive layers on a PET or other substrate, then the stack is cut to predetermined sizes which are then peeled off from the substrate to obtain green chips.

Further, when using the sheet method, the dielectric layer paste is used to form a green sheet, this is printed with the internal electrode layer paste, then this is stacked to form a green chip.

Before firing, the green chip is treated to remove the binder. As the conditions of the treatment for removing the binder, the rate of temperature rise is preferably 5 to 300°C/hour, more preferably 10 to 100°C/hour, the holding temperature is preferably 180 to 400°C, more preferably 200 to 300°C, and the temperature holding time is preferably 0.5 to 24 hours, more preferably 5 to 20 hours. Further, the atmosphere of the treatment for removing the binder is preferably made the air.

Next, the green chip treated to remove the binder is fired. The atmosphere when firing the green chip may be suitably selected in accordance with the type of the conductive material in the internal electrode layer paste, but when using a conductive material comprised of Ni or an Ni alloy or other base metal, the oxygen partial pressure in the firing atmosphere is preferably $10^{-9}$ to $10^{-4}$ Pa. If the oxygen partial pressure is less than that range, the conductive material of the internal electrode layers will abnormally sinter and will be broken in some cases. Further, if the oxygen partial pressure is over the range, the internal electrode layers tend to oxidize.

Further, the holding temperature at the time of firing is preferably 1000 to 1400°C, more preferably 1100 to 1350°C. If the holding temperature is less than the range, the densification becomes insufficient, while if over the range, the internal electrode layers will abnormally sinter causing breakings of electrode, the internal electrode layer materials will diffuse resulting in deterioration of the capacity-temperature characteristic, or the dielectric ceramic composition will easily be reduced.

As other firing conditions, the rate of temperature rise is preferably 100 to 900°C/hour, more preferably 200 to 900°C/hour, the temperature holding time is preferably 0.5 to 8 hours, more preferably 1 to 3 hours, and the cooling rate is preferably 50 to 500°C/hour, more preferably 200 to 300°C/hour. Further, the firing atmosphere is preferably made a reducing atmosphere. As the atmosphere gas, for example, a mixed gas of $N_2$ and $H_2$ which is wetted is preferably used.

When firing in a reducing atmosphere, the capacitor element body is preferably annealed. The annealing is treatment for reoxidizing the dielectric layer. This enables the IR life to be remarkably lengthened, so the reliability is improved.

The oxygen partial pressure in the annealing atmosphere is preferably $10^{-3}$ Pa or more, in particular $10^{-2}$ to 10 Pa. If the oxygen partial pressure is less than this range, reoxidation of the dielectric layers is difficult, while if over that range, the internal electrode layers tend to oxidize.

The holding temperature at the time of annealing is preferably 1200°C or less, particularly 500°C to 1200°C. If the holding temperature is less than the above range, the dielectric layers will not sufficiently reoxidize, so the IR will be low and further the high temperature accelerated life will easily be shortened. On the other hand, if the holding temperature exceeds the above range, the internal electrode layers will oxidize and the capacity will fall. Not only that, the internal electrode layers will end up reacting with the dielectric base materials resulting in easier deterioration of the capacity-temperature characteristic, decline of the IR, and decline of the high temperature load life.

As other annealing conditions, the rate of temperature rise is preferably 100 to 900°C/hour, more preferably 200 to 900°C/hour, the temperature holding time is preferably 0.5 to 12 hours, more preferably 1 to 10 hours, and the cooling rate is preferably 50 to 600°C/hour, more preferably 100 to 300°C/hour. Further, as the atmosphere gas in the annealing, for example wetted $N_2$ gas etc. is preferably used.

To wet the $N_2$ gas or mixed gas in the above treatment to remove the binder, firing, and annealing, for example a wetter etc. may be used. In this case, the water temperature is preferably 5 to 75°C or so.

The treatment to remove the binder, firing, and annealing may be performed consecutively or independently.

The thus obtained capacitor element body may be for example end polished by barrel polishing, sandblasting, etc. and printed or transferred and baked with the external electrode paste to form the external electrodes 4. The firing conditions of the external electrode paste are preferably, for example, in a mixed gas of wet $N_2$ and $H_2$, 600 to 800°C, and 10 minutes to 1 hour or so. Further, in accordance with need, the external electrodes 4 are plated etc. to form covering layers.

The thus produced multilayer ceramic capacitor of the present invention is mounted on a printed circuit board by soldering etc. and used for various types of electronic apparatuses.

Above, an embodiment of the present invention was explained, but the present invention is not limited to the above-mentioned embodiment in any way and may be modified in various ways within a scope not exceeding the gist of the present invention.

For example, in the above-mentioned embodiment, as the electronic device according to the present invention, a multilayer ceramic capacitor was illustrated, but the electronic device according to the present invention is not limited to a multilayer ceramic capacitor and may be any device having dielectric layers comprised of the above dielectric ceramic composition.

EXAMPLES

Below, the present invention will be explained by more detailed examples, but the present invention is not limited to these examples in any way.

Example 1

Preparation of Reacted Material

First, a barium titanate precursor with an average particle diameter of 0.15 $\mu$m (barium titanyl oxalate, Ba/Ti=1.000) serving as the material of the main component and a $Y_2O_3$ powder serving as the material of the fourth subcomponent (material of R oxide) were prepared. Next, the prepared barium titanate precursor and $Y_2O_3$ powder were wet mixed and pulverized by a ball mill to form a slurry. This slurry was dried, then calcined and pulverized to obtain the reacted material. Note that the calcining conditions were made a rate of temperature rise: 200°C/hour, holding temperature: 500°C, temperature holding time: 2 hours, atmosphere: air. Further, the amount of addition of $Y_2O_3$, converted to Y element, was made 0.025 mole with respect to 100 moles of the main component.

That is, in the present example, the average number of moles $M_{ave}$ of Y oxide, converted to Y element, with respect to 100 moles of barium titanate in the reacted material was made 0.025 mole.

Further, the obtained reacted material was measured and evaluated by the later explained methods for the ratios of content of the Y oxide (R oxide) at the different depths in the particles.

Preparation of Dielectric Layer Paste

Next, the following first to fifth subcomponents were added to the above obtained reacted material and wet mixed and pulverized by a ball mill to form a slurry. This slurry was dried, then calcined and pulverized to obtain a dielectric ceramic composition powder. Note that the amounts of addition of the subcomponents are amounts of addition converted to oxides with respect to 100 moles of the main component (however, $Y_2O_3$ is amount of addition converted to Y element) .

MgO     (first subcomponent): 1.2 moles
$(Ba,Ca)SiO_3$   (second subcomponent): 0.75 mole
$V_2O_5$      (third subcomponent): 0.03 mole
$Y_2O_3$      (fourth subcomponent): 0.175 mole
MnO     (fifth subcomponent): 0.1 mole

Further, the obtained dielectric material powder in 100 parts by weight, acryl resin in an amount of 4.8 parts by weight, ethyl acetate in 100 parts by weight, a mineral spirits in 6 parts by weight, and toluene in 4 parts by weight were mixed by a ball mill to a paste so as to obtain the dielectric layer paste.

Preparation of Internal Electrode Layer Paste

Next, Ni particles in an amount of 44.6 parts by weight, terpineol in 52 parts by weight, ethyl cellulose in 3 parts by weight, and benzotriazole in 0.4 part by weight were kneaded by a triple roll mill to a slurry so as to obtain the internal electrode layer paste.

Preparation of Multilayer Ceramic Capacitor

These prepared pastes were used in the following way to produce the multiplayer ceramic chip capacitor 1 shown in FIG. 1.

First, the obtained dielectric layer paste was used to form a green sheet on a PET film. This was printed with the internal electrode paste, then the sheet was peeled off from the PET film. Next, such green sheets and protective use green sheets (sheets not printed with internal electrode layer paste) were stacked and press bonded to obtain a green chip.

Next, green chip was cut to a predetermined size and treated to remove the binder, fired, and annealed under the following conditions to obtain a multilayer ceramic fired body.

The conditions for the treatment to remove the binder were rate of temperature rise: 32.5°C/hour, holding temperature: 260°C, temperature holding time: 8 hours, atmosphere: air.

The firing conditions were rate of temperature rise: 200°C/hour, holding temperature: 1260 to 1280°C, temperature holding time: 2 hours, cooling rate: 200°C/hour, atmosphere gas: wetted $N_2$ + $H_2$ mixed gas (oxygen partial pressure: $10^{-7}$ Pa) .

The annealing conditions were rate of temperature rise: 200°C/hour, holding temperature: 1050°C, temperature holding time: 2 hours, cooling rate: 200°C/hour, atmosphere gas: wetted $N_2$ gas (oxygen partial pressure: 1.01 Pa).

Note that the wetting of the atmosphere gas at the time of firing and annealing was performed using a wetter with a water temperature of 20°C.

Next, the obtained multilayer ceramic fired body was polished at its end faces by sandblasting, then was coated with external electrodes comprised of In-Ga to obtain a sample of the multilayer ceramic capacitor of Example 1 shown in FIG. 1.

The size of the obtained capacitor sample was 3.2 mm × 1.6 mm × 0.6 mm, the number of dielectric layers sandwiched between internal electrode layers was 4, the thickness of each dielectric layer (interlayer thickness) was 4.5 μm, and the thickness of each internal electrode layer was 1.2 μm.

Next, the above prepared reacted material was measured by the following method to determine the ratios of content of Y oxide (R oxide) at the different depths in the particles, while the obtained capacitor sample was evaluated by the following methods to determine the average crystal grain size of the sintered body, specific permittivity ε, dielectric

loss tan$\delta$, insulation resistance IR, CR product, temperature characteristic of the electrostatic capacitance and IR accelerated life.

Ratios of Content of Y oxide (R oxide) at Different Depths in Particles

The above prepared reacted materials were measured for the ratios of contents of the Y oxide at the different depths in the particles using a plasma spectrophotometer (ICP) by the method explained below.

That is, first, 0.1 to 0.5 g of the above prepared reacted material was added to a mixed solution of 2 ml of hydrochloric acid and 1 ml of hydrogen peroxide (30% aqueous solution) to dissolve the reacted material. Next, after the elapse of a certain time, the mixed solution containing the reacted material was filtered by a membrane filter (0.2 $\mu$m) to remove the undissolved reacted material. Next, 100 ml of the filtered solution was taken and diluted 50-fold to prepare a measurement sample of the surfacemost part.

Next, the undissolved reacted material obtained by the filtration was treated repeatedly by the same procedure to collect and dilute the ingredients dissolved at the different depths and thereby prepare measurement samples of the different depths of the particles.

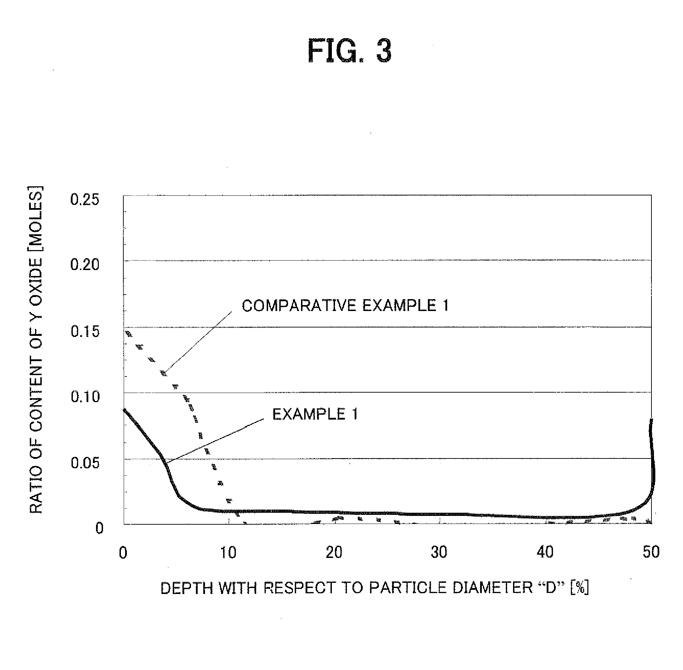

The obtained plurality of measurement samples were measured using a plasma spectrophotometer (ICPS-8000: made by Shimadzu Corporation) to find the ratios of content of Y oxide with respect to 100 moles of barium titanate at the different depths in the particles (number of moles converted to Y element). The obtained results are shown graphed at FIG. 3.

Note that the above measurements were performed for a plurality of dielectric particles and the results obtained were averaged to obtain the above values. Further, the ratio of content of R oxide at the depth of 0% of the particle diameter D was determined based on a plurality of measurement results at depths of several %.

Note that in Example 1, the ratio of the number of moles $M_0$ and $M_{10}$ of R oxide, converted to R elements, with respect to 100 moles of barium titanate at the depths of 0% and 10% of the particle diameter D (that is, $T_0$ and $T_{10}$ shown in FIG. 2) was $M_0/M_{10}$=13.0.

Further, the ratio of the number of moles $M_{40}$ and $M_{50}$ of R oxide, converted to R elements, with respect to 100 moles of barium titanate at the depths of 40% and 50% of the particle diameter D (that is, $T_{40}$ and $T_{50}$ shown in FIG. 2) was $M_{50}/M_{40}$=2.5.

Further, the ratio of content of Y oxide in the intermediate region of a depth from the particle surface of more than 10% and less than 40% of the particle diameter D was within a range of 0.2 to 1.5 times the average number of moles $M_{ave}$.

Average Crystal Grain Size of Sintered Body

As the method of measuring the average grain size of the sintered body, first, an obtained capacitor sample was cut at a plane vertical to the internal electrodes and the cut surface was polished. Next, the polished surface was chemically etched then was examined under a scanning electron microscope (SEM). The grain size was calculated by the cord method assuming the shapes of the crystal grains in the sintered body to be spherical. The results are shown in Table 1.

Specific Permittivity $\varepsilon$

A capacitor sample was measured for electrostatic capacitance C at a reference temperature of 20°C by a digital LCR meter (YHP4274A made by Yokogawa Electric Corporation) under conditions of a frequency of 120Hz and an input signal level (measured voltage) of 0.5 Vrms/$\mu$m. Further, the specific permittivity (no unit) was calculated from the obtained electrostatic capacitance, the thickness of the dielectric layers of the multilayer ceramic capacitor, and the overlapping areas of the internal electrodes. The higher the specific permittivity the better. The results are shown in Table 1.

Dielectric Loss tan$\delta$

A capacitor sample was measured for the dielectric loss tan$\delta$ at a reference temperature of 20°C by a digital LCR meter (YHP4274A made by Yokogawa Electric Corporation) under conditions of a frequency of 120Hz and an input signal level (measured voltage) of 0.5 Vrms/$\mu$m. The smaller the dielectric loss, the better. The results are shown in Table 1.

Insulation Resistance IR

A capacitor sample was measured for insulation resistance IR using an insulation resistance meter (R8340A made by Advantest Corporation) after applying a DC voltage of 4V/$\mu$m at 20°C to the capacitor sample for 1 minute. The results are shown in Table 1.

CR Product

The CR product was measured by finding the product of the above measured electrostatic capacitance C (unit: $\mu$F) and insulation resistance IR (unit: M$\Omega$). The larger the CR product the better. The results are shown in Table 1.

Temperature Characteristic of Electrostatic Capacitance

A capacitor sample was measured for electrostatic capacitance at -55 to 125°C, the rate of change $\Delta$C of the electrostatic capacitance was calculated, and whether the X7R characteristic of the EIA standard was satisfied was evaluated. That is, whether the rate of change $\Delta$C at -55 to 125°C was within $\pm$15% was evaluated. The results are shown in Table 1. Note that in Table 1, samples satisfying the X7R characteristic were indicated as "good".

IR Accelerated Life

A capacitor sample was subjected to an accelerated test at 180°C under a 12V/$\mu$m field. The time until the insulation resistance IR dropped to below $10^8\Omega$ (unit: hours) was calculated. The longer the IR accelerated life, the better. The results are shown in Table 1.

Comparative Example 1

Except for using barium titanate with an average particle size of 0.15 $\mu$m (Ba/Ti=1.000) instead of a barium titanate precursor as the material of the main component when preparing the reacted material, the same procedure was followed as in Example 1 to prepare a reacted material. Further, the obtained reacted material was used in the same way as in Example 1 to prepare a capacitor sample. Further, the obtained reacted material and capacitor sample were evaluated in the same way as in Example 1.
The results of the ratios of content of the Y oxide (number of moles converted to Y element) with respect to 100 moles of barium titanate in the reacted material are shown in FIG. 3. Further, the electrical characteristics are shown in Table 1.

Table 1

Table 1

| | Average crystal grain size [$\mu$m] | Specific permittivity $\varepsilon$ | tan $\delta$ [%] | IR [$\Omega\cdot$m] | CR product [$\mu$F$\cdot$M$\Omega$] | X7R characteristic | IR accelerated life [h] |
|---|---|---|---|---|---|---|---|
| Ex. 1 | 0.14 | 1208 | 1.3 | $8.00 \times 10^{11}$ | 8560 | Good | 7.7 |
| Comp. Ex. 1 | 0.17 | 1248 | 3.5 | $5.64 \times 10^{12}$ | 7040 | Good | 4.0 |

Evaluation 1

From FIG. 3, it can be confirmed that in the reacted materials (dielectric particles) of Example 1, the ratio of content of Y oxide decreased at the surface region of a depth from the particle surface of 0% to 10% of the particle diameter D and the ratio of content of Y oxide increased at the center region of a depth from the particle surface of 40% to 50% of the particle diameter D. Further, in Example 1, the ratios of content of the Y oxide at the different regions (that is, $M_0/M_{10}$ at the surface region, $M_{50}/M_{40}$ at the center region, and the ratio of content of Y oxide at the intermediate region) were all in the preferable range of the present invention.

As opposed to this, from FIG. 3, in the reacted material (dielectric particles) of Comparative Example 1, the ratio of content of Y oxide decreased in the surface region of the region of a depth from the particle surface of 0% to 10% of the particle diameter D, but the ratio of content of the Y oxide did not increase at the center region of the region of a depth from the particle surface of 40% to 50% of the particle diameter D.

Further, from Table 1, it can be confirmed that Example 1 could be improved in IR accelerated life without causing deterioration of other characteristics (specific permittivity $\varepsilon$, dielectric loss $\tan\delta$, insulation resistance IR, CR product, and temperature characteristic of the electrostatic capacitance). On the other hand, Comparative Example 1 was inferior in IR accelerated life.

Example 2

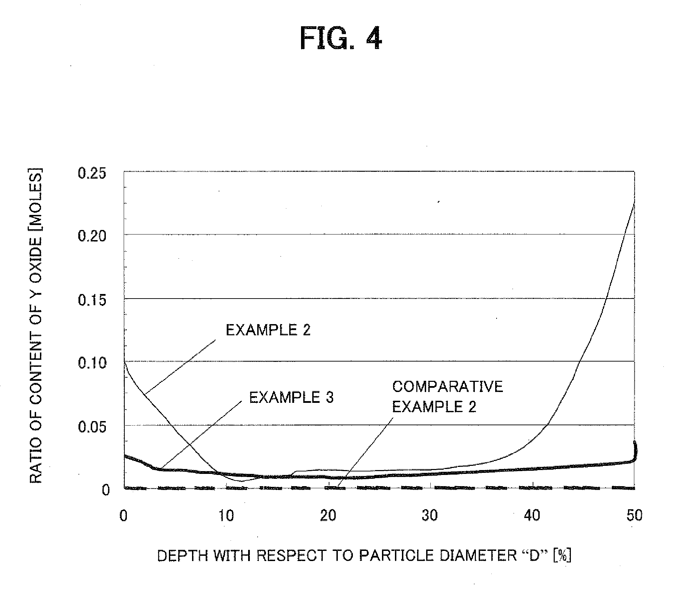

Except for using a barium titanate precursor with an average particle diameter of 0.3 $\mu$m (barium titanyl oxalate, Ba/Ti=0.995) as the material of the main component when preparing the reacted material, the same procedure was followed as in Example 1 to prepare a reacted material. Further, the obtained reacted material was used in the same way as in Example 1 to prepare a capacitor sample. Further, the obtained reacted material and capacitor sample were evaluated in the same way as in Example 1. The results are shown in FIG. 4 and Table 2.

Note that in Example 2, the ratio of $M_0$ and $M_{10}$ was $M_0/M_{10}$=3.6, the ratio of $M_{40}$ and $M_{50}$ was $M_{50}/M_{40}$=5.5, and the ratio of content of Y oxide at the intermediate region of a depth from the particle surface of more than 10% and less than 40% of the particle diameter D was in a range of 0.2 to 6.0 times the average number of moles $M_{ave}$.

Example 3

Except for using a barium titanate precursor with an average particle diameter of 0.3 $\mu$m (barium titanyl oxalate, Ba/Ti=1.000) as the material of the main component when preparing the reacted material, the same procedure was followed as in Example 1 to prepare a reacted material. Further, the obtained reacted material was used in the same way as in Example 1 to prepare a capacitor sample. Further, the obtained reacted material and capacitor sample were evaluated in the same way as in Example 1. The results are shown in FIG. 4 and Table 2.

Note that in Example 3, the ratio of $M_0$ and $M_{10}$ was $M_0/M_{10}$=4.6, the ratio of $M_{40}$ and $M_{50}$ was $M_{50}/M_{40}$=1.1, and the ratio of content of Y oxide at the intermediate region of a depth from the particle surface of more than 10% and less than 40% of the particle diameter D was in a range of 0.2 to 2.5 times the average number of moles $M_{ave}$.

Comparative Example 2

Except for using barium titanate with an average particle diameter of 0.3 $\mu$m (Ba/Ti=1.000) as the material of the main component, directly adding the first to fifth subcomponents (amount of addition of fourth subcomponent, converted to Y element, of 0.2 mole) to the barium titanate, then calcining and pulverizing the result to prepare a dielectric ceramic composition powder, the same procedure was followed as in Example 3 to prepare a capacitor sample. That is, in Comparative Example 2, the step of reacting the material of the main component and at least part of the material of the fourth subcomponent to obtain a reacted material was not employed. Further, the obtained capacitor sample was evaluated in the same way as in Example 1. The results are shown in Table 2.

Further, in Comparative Example 2, the barium titanate material was measured for ratio of content of Y oxide in the same way as in Example 1. The results are shown in FIG. 4.

Table 2

Table 2

|  | Average crystal grain size [$\mu$m] | Specific permittivity $\varepsilon$ | tan $\delta$ [%] | IR [$\Omega\cdot$m] | CR product [$\mu$F·M$\Omega$] | X7R characteristic | IR accelerated life [h] |
|---|---|---|---|---|---|---|---|
| Ex. 2 | 0.35 | 3750 | 10.6 | $1.52 \times 10^{11}$ | 5050 | Good | 19.7 |
| Ex. 3 | 0.30 | 3650 | 6.8 | $1.48 \times 10^{11}$ | 5400 | Good | 12.7 |
| Comp. Ex. 2 | 0.30 | 2812 | 5.4 | $1.36 \times 10^{11}$ | 3390 | Good | 6.5 |

Evaluation 2

From FIG. 4, it can be confirmed that in the reacted materials (dielectric particles) of Examples 2, 3 as well, the ratios of content of Y oxide decreased at the surface regions and the ratios of content of Y oxide increased at the center regions. Further, in Examples 2, 3 as well, the ratios of content of the Y oxide at the different regions (that is, $M_0/M_{10}$ at the surface region, $M_{50}/M_{40}$ at the center region, and the ratio of content of Y oxide at the intermediate region) were all in the preferable range of the present invention.

As opposed to this, from FIG. 4, in Comparative Example 2, barium titanate was not reacted in advance with Y oxide, so no Y oxide were detected.

Further, from Table 2, it can be confirmed that Examples 2, 3 were improved in IR accelerated life without deterioration of the other characteristics (specific permittivity ε, dielectric loss tanδ, insulation resistance IR, CR product, and temperature characteristic of the electrostatic capacitance).

On the other hand, by comparing the results of Comparative Example 2 and Example 3, it can be confirmed that despite the use of materials of the main component having substantially the same average particle diameters and both having Ba/Ti=1.000, Comparative Example 2 was inferior in all characteristics (in particular IR accelerated life) compared with Example 3.

**Claims**

1. Dielectric particles including
   a main component including barium titanate and
   R oxide (where R is at least one element selected from Y, La, Ce, Pr, Nd, Pm, Sm, Eu, Gd, Tb, Dy, Ho, Er, Tm, Yb, and Lu), wherein,
   when defining the particle diameter of said dielectric particles as "D" and
   defining the region of a depth from the particle surface of 0% to 10% of said D as a surface region, a region of a depth from the particle surface of more than 10% to less than 40% of said D as an intermediate region, and a region of a depth from the particle surface of 40% to 50% of said D as a center region,
   in said surface region, the ratio of content of said R oxide decreases from the surface side toward the center of said dielectric particles and
   in said center region, the ratio of content of said R oxide increases from the surface side toward the center of said dielectric particles.

2. The dielectric particles as set forth in claim 1, wherein, when defining the average number of moles of said R oxide converted to R elements with respect to 100 moles of said barium titanate in said dielectric particles as a whole as $M_{ave}$, said $M_{ave}$ is more than 0 mole and not more than 0.5 mole.

3. The dielectric particles as set forth in claim 1 or 2, wherein, relating to the ratio of content of said R oxide in said surface region,
   when defining the numbers of moles of said R oxide converted to R elements with respect to 100 moles of barium titanate at the depths of 0% and 10% of said D as $M_0$ and $M_{10}$ respectively, the ratio $M_0/M_{10}$ is 1 to 30 (however, not including 1).

4. The dielectric particles as set forth in any one of claims 1 to 3, wherein, relating to the ratio of content of said R oxide in said center region,
   when defining the numbers of moles of said R oxide converted to R elements with respect to 100 moles of barium titanate at the depths of 40% and 50% of said D as $M_{40}$ and $M_{50}$ respectively, the ratio $M_{50}/M_{40}$ is 1 to 100 (however, not including 1).

5. The dielectric particles as set forth in any one of claims 1 to 4, wherein the numbers of moles of said R oxide converted to R elements with respect to 100 moles of barium titanate at said intermediate region is a range of 0.2 to 8.0 times said $M_{ave}$.

6. A method of production of a dielectric ceramic composition having
   a main component including barium titanate and
   a fourth subcomponent including R oxide (where R is at least one element selected from Y, La, Ce, Pr, Nd, Pm, Sm, Eu, Gd, Tb, Dy, Ho, Er, Tm, Yb, and Lu), comprising
   a step of preparing a reacted material obtained by reacting the material of said main component and at least part of the material of said fourth subcomponent in advance,
a step of adding said reacted material and the remainder of the material of said fourth subcomponent to be included in said dielectric ceramic composition to obtain a dielectric ceramic composition powder, and
a step of firing said dielectric ceramic composition powder, wherein
any dielectric particles of any one of claims 1 to 5 is used as said reacted material.

7.  The method of production of a dielectric ceramic composition as set forth in claim 6, wherein the content of said fourth subcomponent in the finally obtained dielectric ceramic composition converted to R elements is 0.1 to 10 moles with respect to 100 moles of said main component.

8.  The method of production of a dielectric ceramic composition as set forth in claim 6 or 7, wherein the ratio of said fourth subcomponent included in said reacted material converted to R elements with respect to 100 moles% of the total of said fourth subcomponent to be finally included in said dielectric ceramic composition is 0 mole% to less than 50 mole%.

9.  The method of production of a dielectric ceramic composition as set forth in any one of claims 6 to 8, wherein said dielectric ceramic composition further includes
a first subcomponent including at least one type of compound selected from MgO, CaO, BaO, and SrO,
a second subcomponent including mainly $SiO_2$ and at least one type of compound selected from MO (where M is at least one type of element selected from Mg, Ca, Ba, and Sr), $Li_2O$, and $B_2O_3$, and
a third subcomponent including at least one type of compound selected from $V_2O_5$, $MoO_3$, and $WO_3$.
the ratios of the subcomponents to 100 moles of said main component being
first subcomponent: 0.1 to 5 moles,
second subcomponent: 0.1 to 12 moles,
third subcomponent: 0 to 0.3 mole (however not including 0) .

10. The method of production of a dielectric ceramic composition as set forth in any one of claims 6 to 9, wherein said dielectric ceramic composition further includes a fifth subcomponent including at least one compound selected from MnO and $Cr_2O_3$, and
a ratio of the fifth subcomponent to 100 moles of said main component is 0.05 to 1.0 mole.

11. The dielectric ceramic composition produced by the method as set forth in any one of claims 6 to 10.

12. An electronic device having dielectric layers comprised of the dielectric ceramic composition as set forth in claim 11.

# FIG. 1

# FIG. 2

PARTICLE DIAMETER "D"

$T_{40}$

CENTER REGION

INTERMEDIATE REGION

SURFACE REGION

$T_{10}$

$T_{50}$

# FIG. 3

# FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8124785 A
- JP 2000281341 A